# EUROPÄISCHE PATENTANMELDUNG

(11) **EP 2 151 611 A1**
(43) Veröffentlichungstag der Anmeldung: **10.02.2010**
(21) Anmeldenummer: 08013923.1
(22) Anmeldetag: 04.08.2008
(51) Int. Cl.: F16J 15/16, F16J 15/32

(54) **Radialwellendichtring mit Notlauf-Dichtlippe**

(71) Anmelder: Carl Freudenberg KG, 69469 Weinheim (DE)
(72) Erfinder: Kritzer, Peter, 67147 Forst (DE); Heiland, Marc, 67549 Worms (DE); Viol, Michael, 69121 Heidelberg (DE)

(57) **Zusammenfassung**

Ein Radialwellendichtring mit mindestens einer Dichtlippe (1, 6), die durch Arbeitsfluidbeaufschlagung gerichtet bewegbar ist, ist im Hinblick auf die Aufgabe, einen Radialwellendichtring zu schaffen, der bei auftretenden Leckagen zwischen Innenraum und Außenraum selbsttätig die Leckagen vermindert oder unterdrückt und dadurch eine Notlaufeigenschaft entfaltet, **dadurch gekennzeichnet, dass** der Dichtlippe (1, 6) ein quellfähiges Material (2) zur Bewegung in einer Vorzugsrichtung zugeordnet ist.

## Beschreibung

### Technisches Gebiet

Die Erfindung betrifft einen Radialwellendichtring mit mindestens einer Dichtlippe, die bei Arbeitsfluidbeaufschlagung gerichtet bewegbar ist.

### Stand der Technik

Radialwellendichtringe der eingangs genannten Art sind aus dem Stand der Technik bereits bekannt. Radialwellendichtringe trennen einen Innenraum, der mit Arbeitsfluid, beispielsweise Öl, befüllt ist, von einem Außenraum ab.

Des Weiteren sind Radialwellendichtringe bekannt, bei denen eine - vom Außenraum in Richtung Innenraum betrachtet - erste Dichtlippe eine zweite Dichtlippe abschirmt. Die zweite Dichtlippe dichtet dabei einen mit Arbeitsfluid befüllten Innenraum gegen einen Außenraum ab, wobei die erste Dichtlippe die zweite Dichtlippe gegen den Außenraum abschirmt. Der ersten Dichtlippe kommt dabei die Aufgabe zu, die Dichtfunktion des Radialwellendichtrings bei Ausfall der zweiten Dichtlippe aufrecht zu erhalten. Bestehende Konzepte benutzen zwei oder mehrere seriell angebrachte Dichtlippen, wobei alle Dichtlippen ständig an der rotierenden Welle anliegen auch wenn sie keine Dichtfunktion erfüllen.

Das ständige Anliegen dieser "nicht notwendigen" Dichtlippen führt zu einer erhöhten Reibung. Diese ständige Reibung bewirkt eine Erhöhung der Verlustenergie im System Welle-Radialwellendichtring, wodurch die erste Dichtlippe eine verstärkte Abnutzung erfährt.

Bei den aus dem Stand der Technik bekannten Radialwellendichtringen ist insbesondere nachteilig, dass eine Dichtlippe, die einen mit Arbeitsfluid befüllten Innenraum gegen einen Außenraum abdichtet, schon bei geringen Leckagen unbrauchbar wird und ausgewechselt werden muss. Dies kann zu plötzlich auftretenden und daher ungeplanten Stillstandszeiten führen, die mit erheblichen Kosten - hervorgerufen z.B. durch Produktionsausfall - einhergehen.

### Darstellung der Erfindung

Der Erfindung liegt daher die Aufgabe zu Grunde, einen Radialwellendichtring zu schaffen, der bei auftretenden Leckagen zwischen Innenraum und Außenraum selbsttätig die Leckagen vermindert oder unterdrückt und dadurch eine Notlaufeigenschaft entfaltet.

Erfindungsgemäß wird die voranstehende Aufgabe durch einen Radialwellendichtring mit den Merkmalen des Patentanspruchs 1 gelöst.

Danach ist der Radialwellendichtring **dadurch gekennzeichnet, dass** zumindest einer Dichtlippe ein quellfähiges Material zur Bewegung in eine Vorzugsrichtung zugeordnet ist.

Erfindungsgemäß ist zunächst erkannt worden, dass eine Dichtlippe, die als Notlauf-Dichtlippe eingesetzt wird, nicht ständig unter einem hohen Druck an einer rotierenden Welle anliegen muss. Sie muss nur dann zuverlässig abdichten, wenn Medium aus dem Innenraum nach außen tritt. Des Weiteren ist erkannt worden, dass ein quellfähiges Material eine Dichtlippe in eine Vorzugsrichtung, nämlich in Richtung der Mantelfläche der Welle, bewegen kann, sobald dies notwendig ist. Ganz konkret ist erkannt worden, dass ein quellfähiges Material bei Beaufschlagung mit einem Arbeitsfluid aus dem Innenraum eine Ausdehnung erfährt, weiche derart gerichtet werden kann, dass eine Dichtlippe verstärkt gegen die Welle gepresst wird. Sobald beispielsweise Öl aus dem Innenraum auf die Dichtlippe auftrifft, wird das quellfähige Material von einer ersten Ausdehnung in eine zweite Ausdehnung überführt, welche die Dichtlippe in der Vorzugsrichtung gegen die Welle presst. Durch die verstärkte Pressung der Dichtlippe gegen die Welle werden Leckagen wirksam selbsttätig unterdrückt und der Radialwellendichtring entfaltet eine Notlaufeigenschaft. Insbesondere kann eine derart modifizierte erste Dichtlippe außerhalb einer zweiten Dichtlippe angeordnet sein, wobei das Aufquellen erst dann an einsetzt, wenn durch Versagen der zweiten Dichtlippe Medium aus dem Innenraum austritt. Die erste Dichtlippe dichtet also erst bei Bedarf ab, die zweite Dichtlippe dichtet den Innenraum dauerhaft ab.

Folglich ist die eingangs genannte Aufgabe gelöst.

Vor diesem Hintergrund könnte das quellfähige Material in einer Ausnehmung der Dichtlippe angeordnet sein. Die Ausnehmung kann derart geometrisch ausgeformt sein, dass das quellfähige Material die Dichtlippe problemlos in eine Vorzugsrichtung drücken oder pressen kann.

Das quellfähige Material könnte als Ring ausgestaltet sein. Durch die Ausgestaltung als Ring ist das quellfähige Material umfänglich an der Dichtlippe angeordnet und kann diese umfänglich mit gleichem Druck gegen eine Welle pressen.

Die Dichtlippe könnte zumindest teilweise aus dem quellfähigen Material gefertigt sein. Durch diese konkrete Ausgestaltung kann die Dichtlippe einstückig gefertigt werden. Vor diesem Hintergrund ist konkret denkbar, dass die Dichtlippe aus einem quellfähigen Elastomer gefertigt ist.

Das quellfähige Material könnte Elastomere aufweisen. So zeigen polare Elastomere wie NBR oder HNBR gegenüber wässrigen Medien eine hohe Quellung, wohingegen unpolare Elastomere wie EPDM eine starke Quellung gegenüber unpolaren Medien wie Öl zeigen.

Das quellfähige Material könnte Superabsorber enthalten. Superabsorber zeichnen sich durch ein rasches und hohes Quellvermögen aus, wodurch eine Dichtlippe mit kurzer Reaktionszeit gegen die Welle gepresst werden kann.

Das quellfähige Medium könnte aus Thermoplasten oder thermoplastischen Elastomeren gefertigt sein.

Das quellfähige Material könnte reversibel von einer Ausdehnung im aufgequollenen Zustand in eine Ausdehnung im nicht aufgequollenen Zustand überführbar sein. Durch diese konkrete Ausgestaltung ist es möglich, dass die Dichtlippe im nicht aufgequollenen Zustand des Materials nur mit geringem Anpressdruck an der Welle anliegt oder sogar einen geringen Spalt zu dieser ausbildet. Sobald die Dichtlippe mit Arbeitsfluid aus dem Innenraum beaufschlagt wird, wird die Dichtlippe mit höherem Anpressdruck gegen die Welle gepresst.

Zu der ersten Dichtlippe könnte eine zweite Dichtlippe in Reihe angeordnet sein. Durch diese konkrete Ausgestaltung ist es möglich, dass die zweite Dichtlippe einen mit Arbeitsfluid wie Öl befüllten Innenraum gegen einen Außenraum abdichtet. Die erste Dichtlippe ist in diesem Fall als Notlauf-Dichtlippe ausgestaltet.

Eine Anordnung könnte einen Radiaiwetlendichtring der hier beschriebenen Art umfassen, wobei eine zweite Dichtlippe unter Anlage an einer Welle einen mit Arbeitsfluid befüllten Innenraum gegen einen Außenraum abdichtet und wobei eine erste Dichtlippe die zweite Dichtlippe gegen den Außenraum abschirmt. Bei einer solchen Anordnung ist es möglich, von außen in den Radialwellendichtring eindringendes Fluid wirkungsvoll abzuschirmen und die zweite Dichtlippe vor dem von außen eindringenden Fluid zu schützen. Des Weiteren kann die erste Dichtlippe bei Beaufschlagung mit Arbeitsfluid aus dem Innenraum die zweite Dichtlippe in ihrer Dichtwirkung unterstützen und eine zweite Barriere für das Arbeitsfluid aus Leckagestellen darstellen. Die Leckage zwischen zweiter Dichtlippe und der Welle wird durch eine verstärkte Anpressung der ersten Dichtlippe an die Welle kompensiert. Auch hierdurch entsteht eine Noflaufeigenschaft des Radialwellendichtrings.

Im Zwischenraum zwischen erster und zweiter Dichtlippe könnte ein Leckage-Sensor platziert sein. Dadurch könnte das Versagen der inneren, zweiten Dichtlippe detektiert werden. Durch Auslösen des Quelleffektes der äußeren, ersten Dichtlippe wäre allerdings sichergestellt, dass kein Arbeitsfluid nach außen gelangen kann, Hiermit kann sichergestellt werden, dass die Dichtung rechtzeitig ausgewechselt wird, bevor auch die erste Dichtlippe, nämlich die äußere Notlauf-Dichtlippe, versagt. Der Sensor gibt das Signal, dass der Radialwellendichtring auf "Reserve fährt".

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: einen Radialwellendichtring, bei der eine erste Dichtlippe als Notlauf-Dichflippe mit einer zweiten Dichtlippe in Reihe geschaltet ist,
- Fig. 2: einen Radialwellendichtring, bei welchem die erste Dichtlippe gegen eine Ringwandung presst,
- Fig. 3: eine Dichtlippe, die eine Ausnehmung aufweist, in der quellfähiges Material aufgenommen ist,
- Fig. 4: einen Radialwellendichtring mit einer ersten Dichtlippe, der ein ringförmiges quellfähiges Material zugeordnet ist,
- Fig. 5: einen Radialwellendichtring mit einer ersten Dichtlippe 1, die axial gegen eine Ringwandung gedrückt wird, sobald das quellfähige Material aufquillt,
- Fig. 6: eine Dichtlippe, die mehrere umlaufende Rippen aufweist,
- Fig. 7: eine Dichtlippe mit mehreren Rippen und einem quellfähigen Material,
- Fig. 8: eine Dichtlippe, an deren einem Ende ein ringförmiges quellfähiges Material angeordnet ist, und
- Fig. 9: eine Dichtlippe, die in Umfangsrichtung mehrere Rippen aufweist, wobei an einem Ende der Dichtlippe ein quellfähiges Material angeordnet ist.

### Ausführung der Erfindung

Alle Figuren der Zeichnung zeigen Schnittansichten längs der Achse der Welle 3,

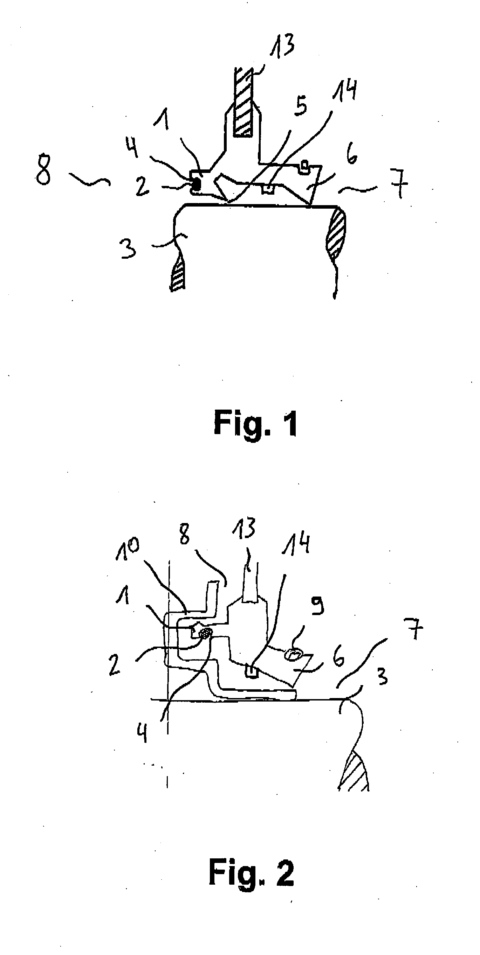

Fig. 1 zeigt in einer Schnittansicht einen Radialwellendichtring mit mindestens einer ersten Dichtlippe 1, der ein quellfähiges Material 2 zur Bewegung der ersten Dichtlippe 1 in eine Vorzugsrichtung gegen die Welle 3 zugeordnet ist. Das quellfähige Material 2 ist in einer Ausnehmung 4 der ersten Dichtlippe 2 angeordnet. Dabei ist das quellfähige Material 2 als Ring ausgestattet. Das quellfähige Material 2 ist reversibel von einer Ausdehnung im aufgequollenen Zustand in eine Ausdehnung im nicht aufgequollenen Zustand überführbar. Sobald das quellfähige Material 2 aufquillt, wird die erste Dichtlippe 1 gegen die Welle 3 gepresst, so dass der Spalt 5 zwischen der ersten Dichtlippe 1 und Welle 3 verschlossen wird.

Zu der ersten Dichtlippe 1 ist eine zweite Dichtlippe 6 in Reihe geschaltet, welche einen mit Arbeitsfluid befüllten Innenraum 7 gegen einen Außenraum 8 abdichtet. Das quellfähige Material 2 kann, obwohl dies in Fig. 1 nicht gezeigt ist, auch zwischen der ersten Dichtlippe 1 und der zweiten Dichtlippe 6 positioniert sein, um auf austretendes Arbeitsfluid rascher zu reagieren und den Spalt 5 zu verschliessen.

Fig. 1 zeigt eine Anordnung mit einem Radialwellendichtring, wobei eine zweite Dichtlippe 6 einen mit Arbeitsfluid befüllten Innenraum 7 gegen einen Außenraum 8 abdichtet. Der Innenraum 7 ist mit dem Arbeitsfluid Öl befüllt. Ganz konkret kann die erste Dichtlippe 1 durch ein Arbeitsfluid, das aus dem Innenraum 7 als Leckagefluid austritt, gegen die Welle 3 gepresst werden. Indem das quellfähige Material 2 bei Arbeitsfluidbeaufschlagung aufquillt, wird der Spalt 5 unter relativ starker Pressung der ersten Dichtlippe 1 gegen die Welle 3 verschlossen.

Fig. 2 zeigt einen Radialwellendichtring mit einer zweiten Dichtlippe 6, die durch eine Feder 9 gegen die Welle 3 gepresst wird. Der Radialwellendichtring weist eine erste Dichtlippe 1 auf, die ein ringförmiges quellfähiges Material 2 in einer Ausnehmung 4 aufweist. Sobald das quellfähige Material 2 aufquillt, wird die erste Dichtlippe 1 gegen eine Ringwandung 10 gepresst.

In den Fig. 1 und 2 ist zwischen der ersten Dichtlippe 1 und der zweiten Dichtlippe 6 als zusätzliches Element ein Leckage-Sensor 14 positioniert.

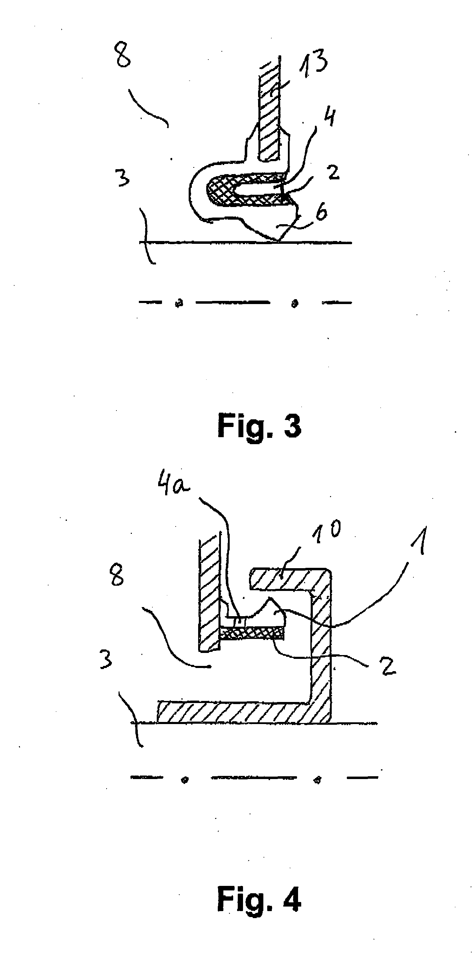

Fig. 3 zeigt eine Dichtlippe 6 die zumindest eine Ausnehmung 4 aufweist, die mit quellfähigem Material 2 ausgefüllt ist. Die Ausnehmung 4 ist nicht durchgehend zusammenhängend, sondern umfänglich unterbrochen.

Das heißt, dass ein unterer Teil der Dichtlippe 6 durch nicht gezeigte Stege mit einem radial äußeren Teil derart verbunden ist, dass sich der untere Teil in einem nach außen gedehnten Zustand befindet. Diese Dehnung wird durch die Anbindung an einen Träger 13 erreicht. Beim Aufquellen des quellfähigen Materials 2 entsteht ein Druck, welcher Kräfte kompensiert, die über die Stege eingetragen werden. Hierdurch wird der der untere Teil der Dichtlippe 6 gegen die Welle 3 gedrückt. Der Außenraum 8 befindet sich hierbei links von der Dichtlippe 6. Die Dichtlippe 6 könnte auch als erste Dichtlippe eingesetzt werden, hinter der eine zweite Dichtlippe platziert ist.

Es ist auch möglich, eine Dichtlippe gemäß Fig. 3 in Alleinstellung einzusetzen. Hierbei müsste allerdings das quellfähige Material 2 in Richtung des Außenraums 8 gerichtet sein. Falls nun ein Arbeitsfluid vom Innenraum 7 z.B. durch eine abgenutzte Dichtlippe 6 in den Außenraum 8 austritt, führt dies zu einer Quellung des quellfähigen Materials 2. Dies wiederum hätte einen erhöhten Anpressdruck der Dichtlippe 6 zur Folge, was zu einer temporären Wiederherstellung deren Dichtfunktion führt.

Fig. 4 zeigt einen Radialwellendichtring mit einer ersten Dichtlippe 1, der ein ringförmiges quellfähiges Material 2 zugeordnet ist. Die erste Dichtlippe 1 wird bei Aufquellen des quellfähigen Materials 2 gegen eine Ringwandung 10 gepresst. Dabei ist das quellfähige Material als Ring auf der radial innen liegenden Seite der ersten Dichtrippe 1 angeordnet, die der Ringwandung 10 abgewandt ist. Das quellförmige Material 2 ist streifenförmig auf der ersten Dichtlippe 1 aufgebracht. Kleine Ausnehmungen 4a in der nicht quellenden ersten Dichtlippe 1 erlauben es dem Arbeitsfluid, zum quellfähigen Material 2 zu gelangen, ohne dass die Dichtstelle passiert wird. In der Praxis wird sich die erste Dichtlippe 1 gemäß Fig. 4 in Serie zu einer weiteren Dichtrippe befinden, welche in Richtung des nicht gezeigten Innenraums 7 platziert ist.

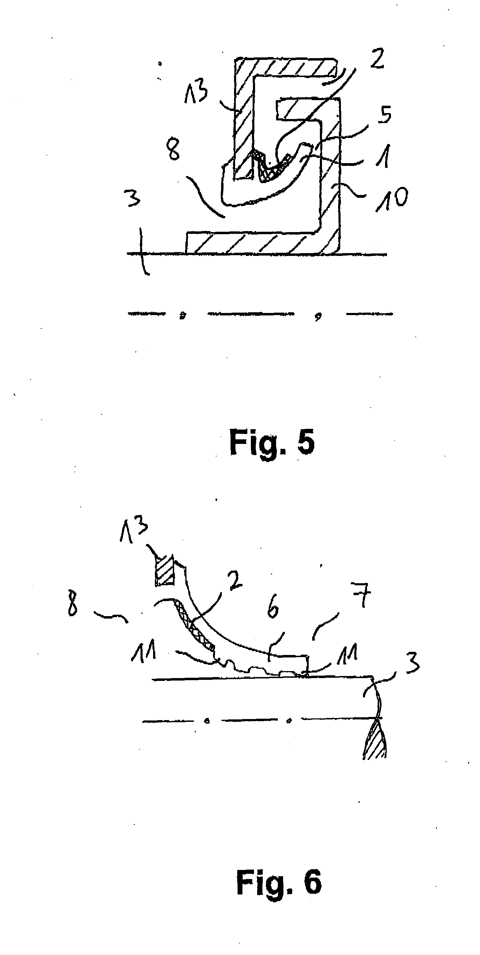

Fig. 5 zeigt einen Radialwellendichtring mit einer ersten Dichtlippe 1, die unter Vorspannung einen Spalt 5 zwischen einer Ringwandung 10 und sich ausbildet. In einer Kuhle der ersten Dichtlippe 1 ist ein quellfähiges Material 2 angeordnet, welches beim Aufquellen die erste Dichtlippe 1 gegen die Ringwandung 10 presst. Die Ringwandung 10 in den Fig. 4 und 5 ist als Gehäusewand einer Kassettendichtung ausgestaltet. Die Dichtlippe 1 kann in Serie zu einer den nicht gezeigten Innenraum 7 abschirmenden zweiten Dichtlippe angeordnet sein.

Fig. 6 zeigt eine Dichtlippe 6, die mehrere Rippen 11 aufweist. An der Dichtlippe 6 ist ein quellfähiges Material 2 angeordnet, welches beim Aufquellen weitere Rippen der Dichtlippe 6 gegen die Welle 3 presst. Hierdurch wird die Dichtwirkung erhöht. Eine bereits leicht abgenutzte Dichtlippe 6, die zu Leckagen neigt, kann dann verstärkt gegen die Welle 3 gepresst werden, wenn Arbeitsfluid aus dem Innenraum 7 auf das quellfähige Material trifft. Die Dichtlippe 6 gemäß Fig. 6 kann in Alleinstellung, ohne zusätzliche Notlauf-Dichtlippe, im Radialwellendichtring angeordnet sein. Dabei ist das quellfähige Material 2 umlaufend nicht zusammenhängend, sondern unterbrochen. Hierdurch entsteht beim Aufquellen keine radial nach außen wirkende Kraft, so dass weitere Rippen 11 zur Anlage an der Welle 3 kommen.

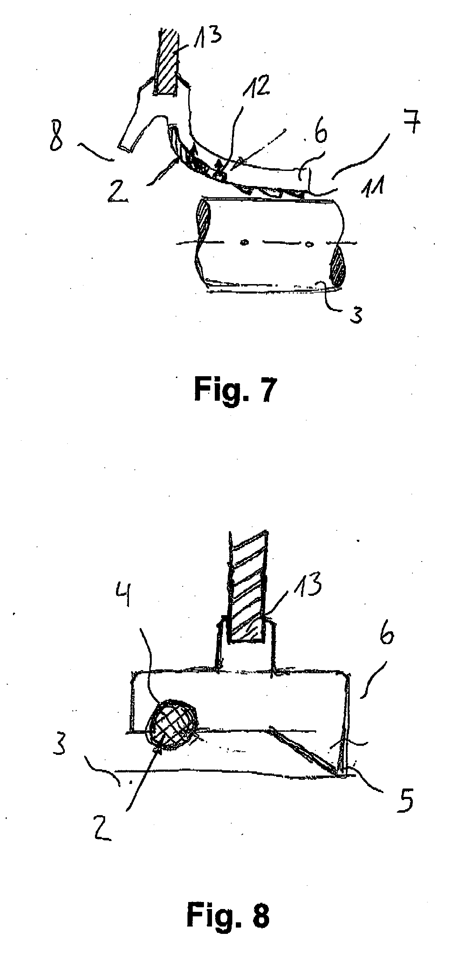

Fig. 7 zeigt einen Radialwellendichtring mit einer Dichtlippe 6, die mehrere Rippen 11 aufweist. Die Dichtlippe 6 weist ein quellfähiges Material 2 auf, welches auf der der Welle 3 zugeordneten Seite der Dichtlippe 6 streifenförmig umlaufend angeordnet ist. Des Weiteren ist der Dichtlippe 6 auf dieser Seite ein Material 12 zugeordnet, welches bei Kontakt mit Öl, einem Arbeitsfluid, quillt. Sobald sich das Material 12 aufquillt, werden weitere Rippen 11 gegen die Welle 3 bewegt. Bei einer Leckage kann dann aus dem Innenraum 7 austretendes Arbeitsfluid dafür sorgen, dass die Dichtlippe 6 stärker gegen die Welle 3 gepresst wird. Hierdurch wird die Leckage unterdrückt. Des Weiteren kann die Dichtlippe 6 durch das quellfähige Material 2 verstärkt gegen die Welle 3 gepresst werden, wenn Arbeitsfluid aus dem Innenraum 7 auf das quellfähige Material 2 trifft. Die Dichtlippe 6 gemäß Fig. 7 kann in Alleinstellung, ohne zusätzliche Notlauf-Dichtlippe, im Radialwellendichtring angeordnet sein.

Fig. 8 zeigt eine Dichtlippe 6, deren eines Ende an der Welle 3 unter Ausbildung eines Spalts 5 anliegt. Dabei ist an deren anderem Ende ein quellfähiges Material 2 als Ring in einer Ausnehmung 4 eingepresst. Beim Aufquellen des quellfähigen Materials 2 entsteht eine Kippwirkung, die dazu führt, dass das dem quellfähigen Material 2 abgewandte Ende gegen die Welle 3 gepresst wird. Sobald ein Fluid oder Arbeitsfluid durch den zwischen Dichtlippe 6 und Welle 3 gebildeten Spalt 5 hindurch dringt oder aus der entgegen gesetzten Richtung auf das quellfähige Material 2 trifft, quillt das quellfähige Material 2 auf. Hierdurch wird eine radiale Kraft vom quellfähigen Material 2 gegen die Welle 3 ausgeübt, welche die Dichtlippe 6 gegen die Welle 3 presst. In Fig. 8 ist die Ausbildung einer Hebel- oder Kippwirkung gezeigt. Um einen Angelpunkt am Träger 13 wird die Seite, auf der das quellfähige Material 2 angeordnet ist, in radialer Richtung von der Welle 3 weg und das andere Ende in radialer Richtung zur Welle 3 hinbewegt. Die Dichtlippe 6 gemäß Fig. 8 kann in Alleinstellung, ohne zusätzliche Notlauf-Dichtlippe, im Radialweltendichtring angeordnet sein. In diesem Fall muss allerdings sicher gestellt sein, dass nicht schon im Normalbetrieb Arbeitsfluid durch den Spalt 5 an das quellfähige Material 2 gelangen kann.

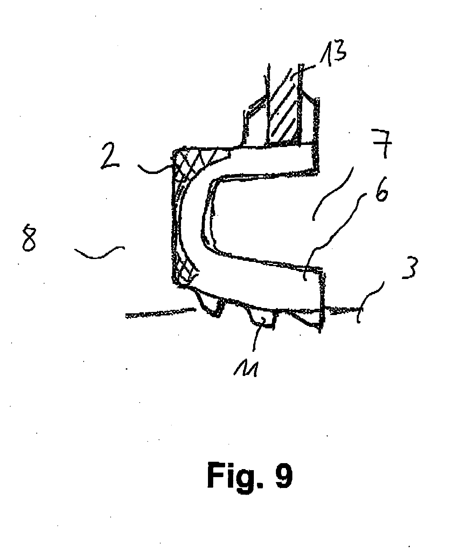

Schließlich zeigt Fig. 9 eine Dichtlippe 6 mit mehreren Rippen 11, wobei auf der dem Innenraum 7 abgewandten Seite der Dichtlippe 6 ein quellfähiges Material 2 angeordnet ist. Beim Aufquellen des quellfähigen Materials 2 wird die Dichtlippe 6 gegen die Welle 3 gepresst. Die Dichtlippe 6 gemäß Fig. 9 kann in Alleinstellung, ohne Notlauf-Dichtlippe, im Radialwellendichtring angeordnet sein.

Das hier beschriebene quellfähige Material 2 kann als quellfähiges Elastomer ausgestaltet sein. Des Weiteren kann das quellfähige Material 2 Superabsorber aufweisen, welche ein rasches Quellvermögen zeigen und dadurch die Dichtlippen 1, 6 schnell gegen die Welle 3 oder eine Ringwandung 10 pressen.

Prinzipiell ist bei einer Anordnung, die zwei Dichtlippen 1, 6 aufweist, vorteilhaft, dass vom Außenraum 8 aus betrachtet der ersten Dichtlippe 1, nämlich der Notlauf-Dichtlippe, das quellfähige Material 2 folgt, da dieses vom Arbeitsfluid aus dem Innenraum 7 zur Quellung angeregt wird.

Im Sinne dieser Erfindung ist eine mit dem Bezugszeichen 1 bezeichnete Dichtlippe 1 eine Notlauf-Dichtlippe, der - vom Außenraum 8 zum Innenraum 7 betrachtet - eine zweite Dichtlippe nachfolgt. Eine mit dem Bezugszeichen 6 bezeichnete Dichtlippe kann in Alleinstellung - ohne Notlauf-Dichtlippe - eingesetzt werden und ist eine dynamische Dichtlippe, die dauerhaft an der Welle 3 anliegen soll, um ein Arbeitsfluid dauerhaft im Innenraum 7 zu halten.

Hinsichtlich weiterer vorteilhafter Ausgestaltungen und Weiterbildungen der erfindungsgemäßen Lehre wird einerseits auf den allgemeinen Teil der Beschreibung und andererseits auf die beifügten Patentansprüche verwiesen.

Abschließend sei ganz besonders hervorgehoben, dass die zuvor gewählten Ausführungsbeispiele lediglich zur Erörterung der erfindungsgemäßen Lehre dienen, diese jedoch nicht auf diese Ausführungsbeispiele einschränken.

## Patentansprüche

1. Radialwellendichtring mit mindestens einer Dichtlippe (1, 6), die durch Arbeitsfluidbeaufschlagung gerichtet bewegbar ist,
**dadurch gekennzeichnet, dass** der Dichtlippe (1, 6) ein quellfähiges Material (2) zur Bewegung in einer Vorzugsrichtung zugeordnet ist.

2. Radialwellendichtring nach Anspruch 1, **dadurch gekennzeichnet, dass** das quellfähige Material (2) in einer Ausnehmung (4) der Dichtlippe (1, 6) angeordnet ist.

3. Radialwellendichtring nach Anspruch 1 oder 2, **dadurch gekennzeichnet, dass** das quellfähige Material (2) als Ring ausgestaltet ist.

4. Radialwellendichtring nach einem der Ansprüche 1 bis 3**, dadurch gekennzeichnet, dass** die Dichtlippe (1, 6) zumindest teilweise aus dem quellfähigen Material (2) gefertigt ist.

5. Radialwellendichtring nach einem der Ansprüche 1 bis 4, **dadurch gekennzeichnet, dass** das quellfähige Material (2) als quellfähiges Elastomer ausgestaltet ist.

6. Radialwellendichtring nach einem der Ansprüche 1 bis 5, **dadurch gekennzeichnet, dass** das quellfähige Material (2) Superabsorber enthält.

7. Radialwellendichtring nach einem der Ansprüche 1 bis 6, **dadurch gekennzeichnet, dass** das quellfähige Material (2) als quellfähiges thermoplastisches Elastomer ausgestaltet ist.

8. Radialwellendichtring nach einem der Ansprüche 1 bis 4 oder 6, **dadurch gekennzeichnet, dass** das quellfähige Material (2) als quellfähiger Thermoplast ausgestaltet ist.

9. Radiaiwellendichtring nach einem der Ansprüche 1 bis 8, **dadurch gekennzeichnet, dass** das quellfähige Material (2) reversibel von einer Ausdehnung im aufgequollenen Zustand in eine Ausdehnung im nicht aufgequollenen Zustand überführbar ist.

10. Radialweliendichtring, nach einem der voranstehenden Ansprüche,
**dadurch gekennzeichnet, dass** zu einer ersten Dichtlippe (1) eine zweite Dichtlippe (6) in Reihe angeordnet ist.

11. Anordnung, umfassend einen Radialwellendichtring nach einem der voranstehenden Ansprüche, wobei eine zweite Dichtlippe (6) unter Anlage an einer Welle (3) einen mit Arbeitsfluid befüllten Innenraum (7) gegen einen Außenraum (8) abdichtet und wobei eine erste Dichtlippe (1) die zweite Dichtlippe (6) gegen den Außenraum (8) abschirmt und dabei als Notlauf-Dichtlippe fungiert.

12. Anordnung nach Anspruch 11, **dadurch gekennzeichnet, dass** zwischen den beiden Dichtlippen (1) und (6) ein Leckage-Sensor (14) platziert ist, der den Durchtritt des Arbeitsfluids durch eine Dichtlippe (6) detektiert.
